# EUROPÄISCHE PATENTSCHRIFT

(11) **EP 1 854 393 B1**
(45) Veröffentlichungstag und Bekanntmachung des Hinweises auf die Patenterteilung: **31.08.2011**
(21) Anmeldenummer: 07007569.2
(22) Anmeldetag: 13.04.2007
(51) Int. Cl.: A47L 15/23, A47L 15/42

(54) **Verfahren zur Durchführung eines Spülprogramms in einer Spülmaschine**
Method for executing a wash programme in a dishwasher
Procédé d'exécution d'un programme de lavage dans un lave-vaisselle

(30) Priorität: 10.05.2006 DE 102006021954
(43) Veröffentlichungstag der Anmeldung: 14.11.2007
(73) Patentinhaber: Miele & Cie. KG, 33332 Gütersloh (DE)
(72) Erfinder: Kornberger, Martin, Dr., 33739 Bielefeld (DE)

(56) Entgegenhaltungen:
- EP-A1- 0 569 733
- EP-A1- 0 659 381
- EP-A1- 1 040 786
- EP-A2- 1 731 081
- CH-A- 384 795
- DE-A1- 19 750 266
- GB-A- 1 119 449

## Beschreibung

Die Erfindung betrifft ein Verfahren zur Durchführung eines Spülprogramms in einer Spülmaschine, welches das Umwälzen von Spülflüssigkeit aus einem Sammeltopf zu Sprüheinrichtungen über ein Leitungssystem umfasst und bei dem mindestens während des Reinigungsabschnitts durch periodisches Pulsieren der Flüssigkeitszufuhr eine Modulation des Volumenstroms durch die Sprüheinrichtungen erfolgt. Aus vielen Bereichen der Technik ist bekannt, dass pulsierende Strahlen durch eine höhere Impulsübertragung eine bessere Reinigungs- oder Abtragswirkung haben als stationäre Strahlen (z.B. Hochdruckreiniger, Munddusche, Wasserstrahlschneidmaschinen, Textilindustrie).

Ein solches Verfahren für eine Geschirrspülmaschine ist durch die CH-PS 384 795 bekannt. Bei der dort beschriebenen Einrichtung zum Reinigen von Gegenständen erfolgt das Unterbrechen des reinigenden Flüssigkeitsstrahls zu dem Zweck, vor dem jeweiligen Auftreffen der Flüssigkeit ein Ablaufen der bereits vorhandenen Wasserschicht auf dem Reinigungsgut zu ermöglichen. Aus diesem Grund werden möglichst lange Unterbrechungen gewählt, die mindestens eine halbe Sekunde dauern sollen. Hierzu bedarf es einer vollständigen Unterbrechung des Flüssigkeitsstrahls. Nachteilig ist bei diesem Verfahren, dass zur Kompensation der dadurch verminderten Reinigungsleistung die Laufzeit erhöht werden muss und insgesamt der Energieverlust durch die Unterbrechungseinrichtung unangemessen hoch ist. Weiterhin muss sich mindestens die gleiche Wassermenge im Umlauf befinden wie sie ohne Unterbrechung erforderlich ist, um einen stabilen Pumpenlauf zu gewährleisten. Mit Geräuschnachteilen ist ebenfalls zu rechnen.

In der EP 0 659 381 A1 ist ein weiteres Verfahren beschrieben, in dem die Umwälzpumpendrehzahl zwischen zwei Stufen mit einer sehr niedrigen Frequenz alternierend geschaltet wird (Impulsspültechnik). Hierbei wird davon ausgegangen, dass in den Phasen geringerer Drehzahl die Spülflüssigkeit in den Sammelbehälter zurücklaufen kann und die Phase hoher Drehzahl so lange dauert, bis der Wasserpegel im Sammelbehälter nur soweit abgesunken ist, dass keine Luft in die Pumpe gezogen wird. Ebenfalls muss hierbei die Laufzeit deutlich verlängert werden, um den für eine gute Reinigung erforderlichen, zeitlich gemittelten Sprühdruck wieder zu erhalten. Die Pumpe muss in diesem Verfahren zwingend drehzahlveränderbar sein.

Die DE 197 50 266 A1 offenbart ein Verfahren zum Betrieb einer Umwälzpumpe bei einer programmgesteuerten Geschirrspülmaschine. Hier wird eine verbesserte Siebreinigung dadurch erzielt, dass im Programmabschnitt Reinigen die Umwälzpumpendrehzahl einmal oder mehrmals sprunghaft kurzzeitig verringert wird.

Bei einer Geschirrspülmaschine gemäß der GB 1 119 449 A ist der Sprüharm mittels einer Torsionsfeder an den Spülbehäler gekoppelt. Die Umwälzpumpe wird mit der Resonanzfrequenz des Systems aus Feder und Sprüharm betrieben, dadurch entstehen Sprühstrahlen, die in der Höhe variieren.

Der vorliegenden Erfindung stellt sich somit das Problem, ein Verfahren der eingangs genannten Art zu offenbaren, bei dem entweder eine Steigerung der Reinigungsleistung bei gleichbleibendem Wassereinsatz oder eine Wassereinsparung bei unverminderter Reinigungsleistung erreichbar ist.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden Unteransprüchen.

Das erfindungsgemäße Verfahren bietet die Möglichkeit, trotz der Verringerung des Gesamt-Volumenstroms durch das Leitungssystem und der damit verbundenen Wassereinsparung ein gutes Reinigungsergebnis zu erreichen, ohne gleichzeitig einen stabilen Lauf der Umwälzpumpe zu gefährden. Realisiert wird dies dadurch, dass die Resonanzen des schwingenden Systems Wassersäulen/Leitungen genutzt werden, um in den Scheitelpunkten Volumenstrom-Werte erreichen zu können, die sich auch bei einem stationären Betrieb ohne Drossel einstellen oder sogar darüber hinaus gehen.

Durch spezielle Materialwahl, d. h. durch die Ausstattung des Leitungssystems mit wenigstens teilweise elastischen Wasserführungen werden Modulationsfrequenzen von 2 bis 5 Hz, vorzugsweise ca. 4 Hz erreicht. Die üblicherweise verwendeten Blasformteile für die Wasserführungen besitzen bereits eine gewisse Eigen-Elastizität, insbesondere im Zusammenhang mit Elastomer-Schlauchabschnitten, die zum Anschluss an Pumpe, Sammeltopf etc. dienen. Mit der im Umlauf befindlichen Wassermenge (üblicherweise im Bereich 3 - 4 Liter) ergibt sich in Analogie zur Mechanik ein schwingendes Feder/Masse-System, dessen Eigenfrequenz (Resonanzfrequenz) sich im Bereich weniger Hertz befindet. Zur Abstimmung dieser Frequenz und Anpassung der Elastizitätskennlinie können in einer weiteren Ausführung gezielt elastische Kavitäten eingebracht werden, z.B. teilweise mit Luft gefüllte Behälter, wobei die kompressible Luft als zusätzliches Federelement dient.

Zur Modulation können in das Leitungssystem eingesetzte schaltbare Drosseln verwendet werden, welche den Weg zu mindestens einer Sprüheinrichtung nur teilweise verschließen oder eine drehzahlveränderbare Umwälzpumpe. In einer weiteren Ausführung können auch drehbare Ventile oder Flatterventile eingesetzt sein, die durch den hydraulischen Druck angetrieben werden. Diese Ventile bzw. Drosseln können auch im Sprüharm integriert sein. Eine weitere Möglichkeit zum Antrieb solcher Drosseln kann die Ausnutzung der Sprüharmdrehung sein.

Ein Ausführungsbeispiel der Erfindung ist in den Zeichnungen rein schematisch dargestellt und wird nachfolgend näher beschrieben. Es zeigt
- Figur 1: eine schematisch dargestellte frontseitig beladbare Haushalt.-Geschirrspülmaschine;
- Figur 2: ein Simulationsmodell;
- Figur 3: der zeitliche Verlauf des Drucks und des Volumenstroms, der aus den Sprüharmen austretenden Flüssigkeit ohne Drossel;
- Figur 4: der zeitliche Verlauf des Drucks und des Volumenstroms der aus den Sprüharmen austretenden Flüssigkeit mit eingeschalteter Drossel.

Eine mit 1 bezeichnete und schematisch dargestellte frontseitig beladbare Haushalt-Geschirrspülmaschine besitzt einen Spülbehälter 2, der im unteren Bereich in einen Sammeltopf 3 mündet. In dem Behälter 2 sind als Sprühvorrichtungen zwei Sprüharme 4 und 5 angeordnet, die jeweils unter einem oberen Geschirrkorb 6 und einem unteren Geschirrkorb 7 in unterschiedlichen Spülebenen befestigt sind. Die Sprüharme 4 und 5 werden über zugeordnete Zuleitungen 8 und 9 eines Leitungssystems von der umlaufenden Spülflüssigkeit einer vorgeschalteten Umwälzpumpe 10 gespeist, wobei die Spülflüssigkeit im Spülbetrieb ständig über eine Filtersiebkombination, bestehend aus einem im Spülbehälterboden 11 angeordneten Feinsieb 12 sowie aus einem nicht gezeigten Grobsieb und einem Feinstsieb geführt und dabei von abgespülten Speiseresten befreit wird und dann in den Sammeltopf 3 läuft. In den Zuleitungen 8 und 9 zu den Sprüharmen ist jeweils eine den Spülflüssigkeitszulauf regulierende, vom Flüssigkeitsdruck angetriebene Drossel 13 bzw. 14 vorgesehen. Die Drosseln können sich auch im Sprüharm befinden. Alternativ kann eine in der Drehzahl modulierbare Umwälzpumpe 10 verwendet werden.

Die Geschirrspülmaschine besitzt die üblichen per Programm anwählbaren unterschiedlichen Spülprogramme zum Spülen der in den Geschirrkörben 6 und 7 einsortierten Geschirr- und Besteckteile (nicht dargestellt), wobei jedes komplette Spülprogramm neben ausblendbaren Programmabschnitten "Vorspülen" und/oder "Zwischenspülen" zumindest die wasserführenden Programmabschnitte "Reinigen" und "Klarspülen" umfasst. Nach dem letzten Programmabschnitt "Klarspülen" schließt sich in der Regel ein Programmabschnitt "Trocknen" an.

Die vorliegende Grundidee besteht darin, den Wasserumlauf im Reinigungs-Programmabschnitt mit einer Frequenz zu modulieren, die im Bereich der Eigenfrequenz des Leitungssystems liegt. Hierdurch nimmt der Volumenstrom in grober Annäherung einen sinusförmigen Verlauf an. Das gesamte wasserführende System aus Sammeltopf 3, Umwälzpumpe 10, Zuleitungen 8 und 9 und Sprüharmen 4 und 5 wird als schwingendes System betrachtet, dessen Resonanz- oder Eigenfrequenz von vielen Parametern abhängt. Besonderen Einfluss haben neben der umgewälzten Wassermasse die Elastizität der Wasserführungen des Leitungssystems 8 und 9 und die Strömungswiderstände. Das Resonanzverhalten kann über zusätzliche elastische Teilstücke oder gezielte Materialauswahl beeinflusst werden. Zusätzlich können kompressible Luftvolumina (Windkessel) verwendet werden, d. h., in das Leitungssystem integrierte, bis auf einen Zu- und Abfluss abgeschlossene, teilweise mit Luft gefüllte Behälter. Wenn es gelingt, das System in Resonanz zu betreiben, wirkt ein solcher Windkessel als Druckverstärker und es werden sehr hohe Druckimpulse und damit Volumenstrompeaks erzielt. Die Modulation wird über die vorgenannten Drosseln 13 und 14 oder eine modulierte Pumpen-Drehzahlsteuerung erreicht. Als Drosseln 13 und 14 können Rotationsklappen oder schaufelbehaftete Turbinenräder verwendet werden, entweder fremdgetrieben oder durch die Wasserströmung.

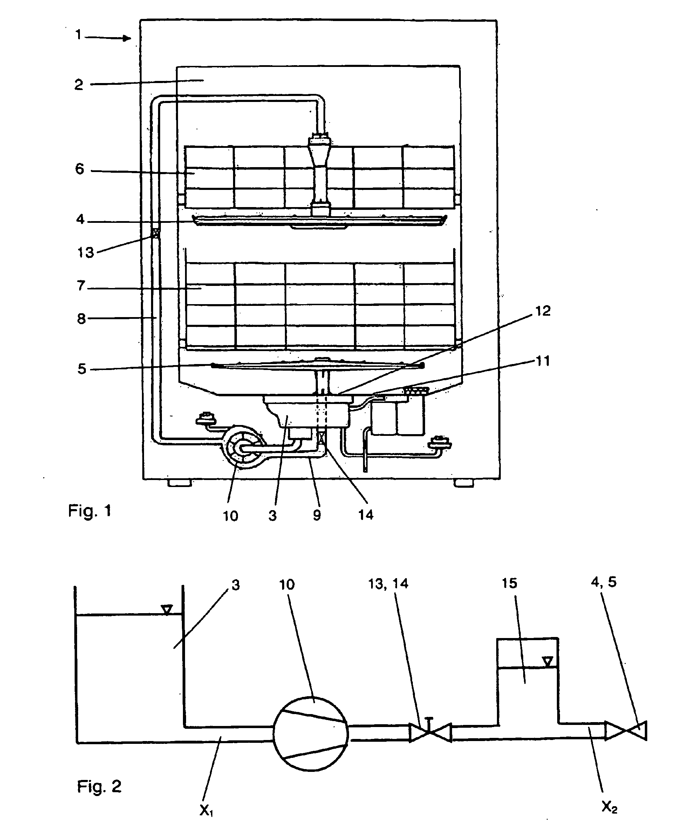

Das in Figur 2 dargestellte Modell und die nachfolgenden Betrachtungen zeigen die prinzipielle Wirksamkeit des erfindungsgemäßen Verfahrens und die Auslegung des Systems. Dabei sind die in Figur 1 gezeigten Bauteile mit identischen Bezugszeichen versehen. Die Sprüharme 4 und 5 sind vereinfacht als nicht steuerbare Drossel dargestellt, die Elastizität der Zuleitungen 8 und 9 wird durch einen Druckwindkessel 15 simuliert, da die Leitungen selbst wie starre Rohre betrachtet werden.

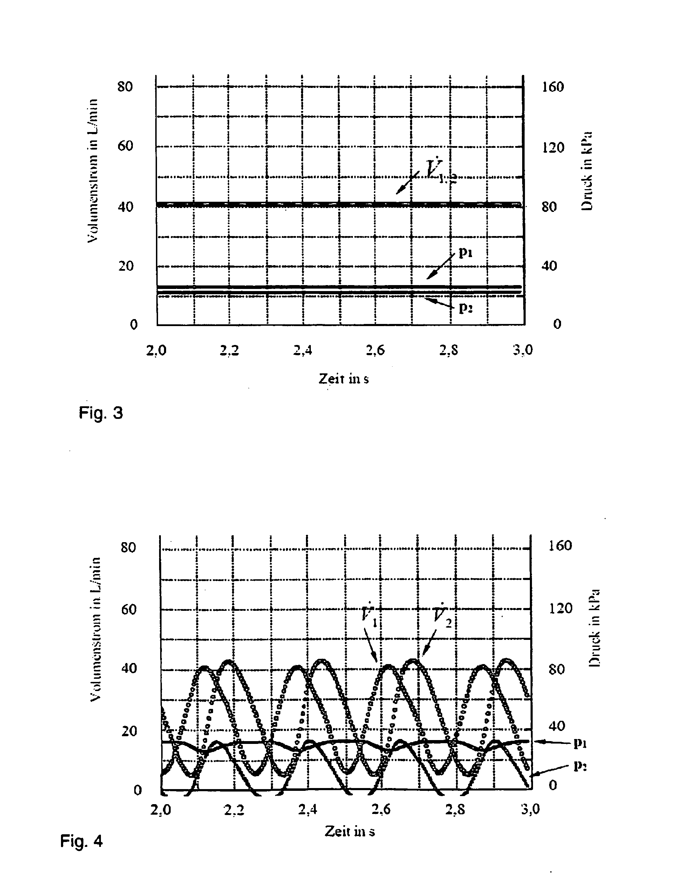

Im Modell können die Elemente mit Hilfe von gekoppelten Bernoulli-Gleichungen numerisch simuliert werden. Auf die Einzelheiten der Rechnung soll hier nicht weiter eingegangen werden. Ermittelt werden Druck p und Volumenstrom *V̇* an den Stellen X₁ und X₂. Der Druck *p*₂ (Druck an der Stelle X₂) ist ein Maß für die Sprühstrahlhöhe. Bei geöffneter, stationärer Drossel 13 bzw. 14 ergeben sich mit typischen Vorgabewerten ca. 40 Liter/min und ein Druck von 22 kPa (siehe Figur 3). Wird nun die Drossel als Rotationsklappe mit einer Frequenz von 4 Hz betrieben, ergeben sich zeitliche Verläufe wie in Figur 4 gezeigt. Bei einem deutlich geringeren, mittleren Volumenstrom von 24 Liter/min erreicht der Druck Maximalwerte von > 30 kPa im Resonanzfall.

Anstelle der Berechnung der Resonanzfrequenz ist eine Ermittlung auf experimentellem Weg möglich. Hierzu muss lediglich ein Frequenzbereich von ca. 1 Hz bis 10 Hz durchfahren werden. Die Eigen- bzw. Resonanzfrequenz des Leitungssystems liegt dann bei der Frequenz, bei der die maximale Sprühstrahlhöhe erreicht wird.

Praktische Versuche haben gezeigt, dass eine Reduktion des Volumenstroms von ca. 25% möglich ist, ohne Abschwächung der Druckmaxima gegenüber dem stationärem Fall.

## Patentansprüche

1. Verfahren zur Durchführung eines Spülprogramms in einer Spülmaschine (1), welches das Umwälzen von Spülflüssigkeit aus einem Sammeltopf (3) zu Sprüheinrichtungen (4, 5) über ein Leitungssystem (8, 9) umfasst und bei dem mindestens während des Reinigungsabschnitts durch periodisches Ein- und Ausschalten der Flüssigkeitszufuhr eine Modulation des Volumenstroms durch die Sprüheinrichtungen (4, 5) erfolgt,
**dadurch gekennzeichnet,**
**dass** die Frequenz der Modulation im Bereich der Eigenfrequenz des Leitungssystems (8, 9) liegt.

2. Verfahren zur Durchführung eines Spülprogramms nach Anspruch 1,
**dadurch gekennzeichnet,**
**dass** die Frequenz zwischen 2 und 5 Hz liegt.

3. Verfahren zur Durchführung eines Spülprogramms nach Anspruch 2,
**dadurch gekennzeichnet,**
**dass** die Frequenz bei 4 Hz liegt.

4. Verfahren zur Durchführung eines Spülprogramms nach mindestens einem der vorhergehenden Ansprüche,
**dadurch gekennzeichnet,**
**dass** das Leitungssystern (8, 9) wenigstens teilweise mit elastischen Wasserführungen ausgestattet ist.

5. Verfahren zur Durchführung eines Spülprogramms nach mindestens einem der vorhergehenden Ansprüche,
**dadurch gekennzeichnet,**
**dass** in das Leitungssystem (8, 9) ein bis auf einen Zu- und Abfluss abgeschlossener, teilweise mit Luft gefüllter Behälter integriert ist.

6. Verfahren zur Durchführung eines Spülprogramms nach mindestens einem der vorhergehenden Ansprüche,
**dadurch gekennzeichnet,**
**dass** zur Modulation in das Leitungssystem (8, 9) eingesetzte schaltbare Drosseln (13, 14) verwendet werden, welche die Wege zu den Sprüheinrichtungen (4, 5) nur teilweise verschließen.

7. Verfahren zur Durchführung eines Spülprogramms nach mindestens einem der vorhergehenden Ansprüche,
**dadurch gekennzeichnet,**
**dass** zur Modulation eine drehzahlveränderbare Umwälzpumpe (10) verwendet wird.

8. Verfahren zur Durchführung eines Spülprogramms nach mindestens einem der vorhergehenden Ansprüche,
**dadurch gekennzeichnet,**
**dass** zur Modulation in den Sprüharm (8, 9) eingesetzte Rotations-Drosseln verwendet werden, welche die Wege zu den Sprühöffnungen (4, 5) nur teilweise oszillierend verschließen.

## Claims

1. Method for carrying out a rinsing program in a rinsing machine (1), which method comprises circulating rinsing fluid from a collecting vessel (3) to spray devices (4, 5) via a line system (8, 9), in which method, at least during the cleaning stage, the volume flow through the spray devices (4, 5) is modulated by periodic connection and disconnection of the fluid supply,
**characterised in that**
the frequency of the modulation is in the range of the natural frequency of the line system (8, 9).

2. Method for carrying out a rinsing program according to claim 1,
**characterised in that**
the frequency is between 2 and 5 Hz.

3. Method for carrying out a rinsing program according to claim 2,
**characterised in that**
the frequency is 4 Hz.

4. Method for carrying out a rinsing program according to at least one of the preceding claims,
**characterised in that**
the line system (8, 9) is equipped with resilient water conduits, at least in part.

5. Method for carrying out a rinsing program according to at least one of the preceding claims,
**characterised in that**
a container is integrated into the line system (8, 9), which container is closed apart from an inflow and outflow and is filled with air in part.

6. Method for carrying out a rinsing program according to at least one of the preceding claims,
**characterised in that**
switchable throttles (13, 14) which are inserted into the line system (8, 9) and close the paths to the spray devices (4, 5) only in part are used for modulation.

7. Method for carrying out a rinsing program according to at least one of the preceding claims,
**characterised in that**
a circulation pump (10) which is variable in terms of speed is used for modulation.

8. Method for carrying out a rinsing program according to at least one of the preceding claims,
**characterised in that**
rotary throttles which are inserted into the spray arm (8, 9) and close the paths to the spray openings (4, 5) only in part in an oscillating manner are used for modulation.

## Revendications

1. Procédé de réalisation d'un programme de lavage dans un lave-vaisselle (1), qui comprend la mise en circulation de liquide de lavage à partir d'un pot collecteur (3) vers des dispositifs de pulvérisation (4, 5) par le biais d'un système de conduite (8, 9) et dans lequel, au moins pendant la période de nettoyage, une modulation du flux volumique à travers les dispositifs de pulvérisation (4, 5) s'effectue par une mise en et hors circuit périodique de l'amenée de liquide,
**caractérisé en ce que**
la fréquence de la modulation se situe dans la plage de la fréquence propre du système de conduite (8, 9).

2. Procédé de réalisation d'un programme de lavage selon la revendication 1,
**caractérisé en ce que**
la fréquence est comprise entre 2 et 5 Hz.

3. Procédé de réalisation d'un programme de lavage selon la revendication 2,
**caractérisé en ce que**
la fréquence est de 4 Hz.

4. Procédé de réalisation d'un programme de lavage selon au moins l'une des revendications précédentes,
**caractérisé en ce que**
le système de conduite (8, 9) est équipé au moins partiellement de conduits d'eau élastiques.

5. Procédé de réalisation d'un programme de lavage selon au moins l'une des revendications précédentes,
**caractérisé en ce que**,
dans le système de conduite (8, 9), il est intégré un récipient fermé à l'exception d'une arrivée et d'une évacuation et partiellement rempli d'air.

6. Procédé de réalisation d'un programme de lavage selon au moins l'une des revendications précédentes,
**caractérisé en ce que**,
pour la modulation, il est utilisé des bobines (13, 14) commutables intégrées dans le système de conduite (8, 9) et qui ne ferment que partiellement les voies vers les dispositifs de pulvérisation (4, 5).

7. Procédé de réalisation d'un programme de lavage selon au moins l'une des revendications précédentes,
**caractérisé en ce que**,
pour la modulation, il est utilisé une pompe de circulation (10) à vitesse variable.

8. Procédé de réalisation d'un programme de lavage selon au moins l'une des revendications précédentes,
**caractérisé en ce que**,
pour la modulation, il est utilisé des bobines de rotation intégrées dans le bras de pulvérisation (8, 9) et qui ne ferment que de façon partiellement oscillante les voies vers les ouvertures de pulvérisation (4, 5).
